# EUROPÄISCHE PATENTSCHRIFT

(11) **EP 0 675 013 B1**
(45) Veröffentlichungstag und Bekanntmachung des Hinweises auf die Patenterteilung: **20.05.1998**
(21) Anmeldenummer: 95102112.0
(22) Anmeldetag: 16.02.1995
(51) Int. Cl.: B60H 1/32, A62C 3/07

(54) **Kraftfahrzeug mit einer Klimaanlage**
Motor vehicle with an air-conditioning
Véhicule automobile avec un dispositif de climatisation

(30) Priorität: 31.03.1994 DE 4411281
(43) Veröffentlichungstag der Anmeldung: 04.10.1995
(73) Patentinhaber: DAIMLER-BENZ AKTIENGESELLSCHAFT, 70567 Stuttgart (DE)
(72) Erfinder: Wertenbach, Jürgen, Dipl.-Ing., D-70734 Fellbach (DE); Abersfelder, Günter, Dr. Dipl.-Phys., D-71065 Sindelfingen (DE)

(56) Entgegenhaltungen:
- EP-A- 0 487 445
- WO-A-90/07683
- DE-A- 4 207 859
- DE-U- 8 715 208
- US-A- 4 248 309
- PATENT ABSTRACTS OF JAPAN vol. 16 no. 443 (C-0985) ,16.September 1992 & JP-A-04 154887 (WATABE KOICHI)
- DATABASE WPI Week 4691 Derwent Publications Ltd., London, GB; AN 91-339797 & WO-A-91 16390 (DU PONT DE NEMOURS & CO E I )
- PATENT ABSTRACTS OF JAPAN vol. 1 no. 39 (M-015) ,20.April 1977 & JP-A-51 146796 (TOSHIBA CORP.)

## Beschreibung

Die Erfindung betrifft ein Kraftfahrzeug mit einer Klimaanlage.

Zum Klimatisieren des Fahrgastinnenraumes von Kraftfahrzeugen werden bisher Kompressionsanlagen verwendet, die als Kreislaufmedium Fluorkohlenwasserstoffe oder Fluorchlorkohlenwasserstoffe enthalten. Unter dem Gesichtspunkt der Umweltverträglichkeit rückt die Suche nach Alternativmedien, die keinen oder nur einen sehr geringen Beitrag zu einem Treibhauseffekt leisten, immer mehr in den Vordergrund. Eine Kompressionsanlage mit CO₂ als Kreislaufmedium ist preiswert und umweltneutral. Wegen der hohen Dampfdrücke von CO₂ ist eine gegenüber der bisherigen Anlagen veränderte Anlagentechnik und druckfestere Anlagenkomponenten erforderlich. Derartige Anlagen sind beispielsweise aus der WO 90/07683 bekannt. Bei Verkehrsunfällen kann es jedoch aufgrund des hohen Druckniveaus von CO₂ im Kreislauf der Klimaanlage bei deren Beschädigung zu einem unkontrollierten Austritt von CO₂ kommen, was insbesondere für die Fahrzeuginsassen zur gesundheitlichen Gefährdung führen kann.

Für am Fahrzeug eventuell auftretende und/oder durch Verkehrsunfälle verursachte Brandherde, insbesondere im Motorraum, sind Feuerlöschanlagen für das Kraftfahrzeug vorgesehen, wie sie beispielsweise aus dem DE-GM 87 15 208.8 bekannt sind. Dort beinhaltet die Löschanlage einen Löschmittelbehälter und Löschleitungen, die an potentiell feuergefährdete Stellen im Motorraum herangeführt sind. Die Löschung erfolgt im Bedarfsfall über Crash- oder Temperatursensoren, ist jedoch auch manuell auslösbar. Eine spezielle Sensorik dazu ist aus der EP-OS 487 445 detailliert entnehmbar. Derartige Löschmittelanlagen stellen für das Gesamtgewicht des Fahrzeuges ein erhebliches Zusatzgewicht dar, mit dem ein erhöhter Kraftstoffverbrauch verbunden ist. Desweiteren nimmt der Löschmittelbehälter zusätzlichen Bauraum ein, der besonders bei Kleinwagen für die Unterbringung einer derartigen Löschanlage in nicht ausreichendem Maße vorhanden ist.

Des weiteren ist aus der US 4,248,309 eine Feuerlöschanlage bekannt, bei der aus einem Kühlkreislauf einer Brennkraftmaschine das Kreislaufmedium verwendet werden soll, um im Motorraum entstandene Brandherde zu löschen. Das Kreislaufmedium besteht konventionell aus Wasser versetzt mit Gefrier- und Korrosionsschutzmitteln. Das Medium steht im Motorbetrieb gewöhnlicherweise unter geringem Überdruck von etwa 1,5 bar. Bei einem Fahrzeugunfall und einem davon ausgelösten Brandherd infolge einer Entzündung von Benzin und/oder Öl soll das Kühlmittel über Leitungen zum Brandherd gerichtet austreten. Dieses vorgeschlagene Löschkonzept ist zum einen für eine Löschung im Motorraum entstandener Brände dahingehend nicht geeignet, daß aufgrund des geringen Überdruckes nur ein Austritt bis zur geodätisch am höchsten gelegenen Stelle des Kreislaufes erfolgen kann, so daß weiter oben liegende Brandherde nicht erfaßt werden können. Auch an diese Stelle nach unten anschließend ist der Druck noch so gering, daß der Kühlwasseraustritt nur schleppend erfolgt, wodurch eine schnelle Bekämpfung des entstandenen Brandherdes nicht möglich ist. Eine schnelle Förderung des Kühlmittels zur Löschung ist allenfalls erst von im Kühlsystem weit unten liegenden Stellen aus erreichbar, wobei aufgrund der geringen Reichweite des austretenden Kühlmittels die Brandherde relativ nahe am Austritt gelegen sein müssen. Dies ist nur selten der Fall, da es sich nicht auf einen engen Bereich genau lokalisieren läßt, wo der Brandherd beim Fahrzeugcrash auftritt.

Zum anderen ist das Kühlwasser als Löschmedium für Benzinbrände auch völlig ungeeignet, da das Wasser zwar dem Brand durch Verdampfung Wärme entzieht, jedoch aufgrund seines spezifischen Gewichtes schwerer als Benzin ist und dadurch für dieses einen reibarmen Träger bildet, auf dem das Benzin allseitig entlanggleitet und somit großflächig verteilt wird. Dies hat zur Folge, daß das entstandene Feuer vom Kühlwasser nicht eingedämmt und ausgelöscht wird, sondern ganz im Gegenteil den lokalen Feuerherd zu einem großen Flächenbrand ausbreitet. Des weiteren verdampft bei dem Löschversuch durch das Kühlmittel nicht nur Wasser sondern auch diesem beigemischtes Gefrierschutzmittel wie beispielsweise Glysantin und Korrosionschutzmittel, die sich beim Einatmen der Fahrzeuginsassen gesundheitsschädlich für diese auswirken. Hinzu kommt noch, daß das verdampfte Wasser bei Kontakt mit den Fahrzeuginsassen schwerwiegende Verbrühungen hervorruft.

Der Erfindung liegt die Aufgabe zugrunde, bei einem Fahrzeugcrash eine Gefährdung der Insassen durch entstehende Brandherde zu vermeiden.

Die Aufgabe ist erfindungsgemäß durch die Merkmale des Patentanspruches 1 gelöst.

Durch die Erfindung wird in einfacher Weise bauraumsparend ein umweltverträgliches, nicht-brennbares, bei einer Verbrennung inertes, ungiftiges und unter Normalbedingungen in gasförmigem Aggregatzustand vorliegendes Kreislaufmedium der Klimaanlage als Feuerlöschmittel bzw. die Klimaanlage als Feuerlöschspender bei Bedarf gezielt genutzt, wobei ein gesonderter Löschmittelspeicher entfällt. Dabei stellen die Löschmittelleitungen sowie die Düsen, die an den möglichen Brandherden enden, ein nur unwesentliches Mehrgewicht für das Fahrzeug dar. Im Crash- und/oder Feuerfall erfolgt über eine Sensorik ein automatischer Feuerlöschvorgang, wobei das austretende löschfähige Kreislaufmedium den Luftsauerstoff, der an der Brandentstehung beteiligt ist und das entfachte Feuer unterstützt, an den feuergefährdeten Bereichen verdrängt. Somit ist ein gesteuerter Austritt des Kreislaufmediums sowohl präventiv zur Vermeidung von Brand und Brandverletzungen als auch aktiv zum Feuerlöschen eines entstandenen Brandherdes denkbar, so daß insgesamt eine Gefährdung der Fahrzeuginsassen im Brandfall vermieden wird.

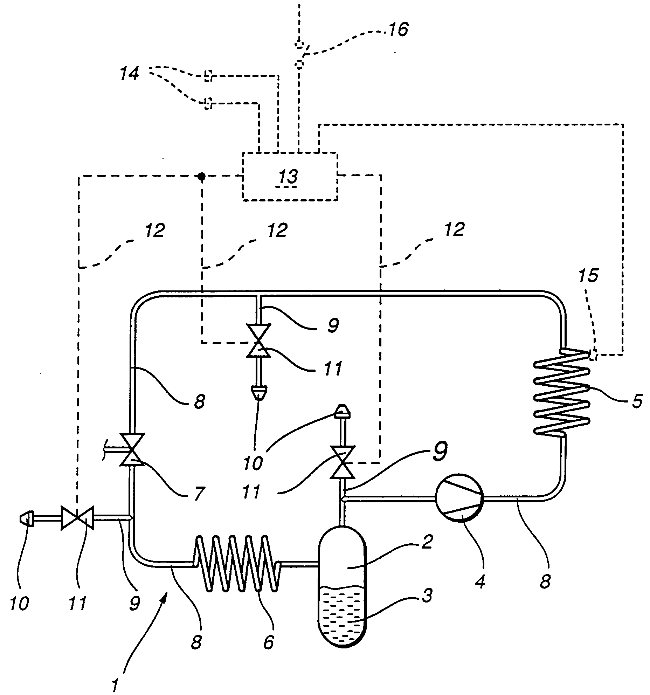

Zweckmäßige Ausgestaltungen der Erfindung können den Unteransprüchen entnommen werden; im übrigen ist die Erfindung anhand eines in den Zeichnungen dargestellten Ausführungsbeispieles nachfolgend näher erläutert; dabei zeigt die Figur schematisch einen Kreislauf einer Klimaanlage für ein Kraftfahrzeug mit sensorgesteuerten Löschmittelleitungen.

In einem geschlossenen Kreislauf 1 einer Kraftfahrzeug-Klimaanlage ist ein Vorratsbehälter 2 angeordnet, der ein umweltverträgliches, nicht-brennbares, ungiftiges Kreislaufmedium 3 wie beispielsweise CO₂ enthält und sich auf der Niederdruckseite eines unmittelbar mit ihm verbundenen, vom Fahrzeugmotor angetriebenen Kompressors 4 befindet. Denkbare Alternativen zu CO₂ als auch als Löschmittel verwendbare Kreislaufmittel einer Klimaanlage sind N₂, SF₆, N₂O. Der Kompressor 4 ist auf seiner Hochdruckseite mit einem vor dem Motorkühler befindlichen Kondensator 5 verbunden, der seinerseits mit einem an den Vorratsbehälter 2 angeschlossenen, in der Lüftereinheit des Motors angeordneten Verdampfer 6 verbunden ist. Stromab des Kondensators 5 und vor dem Verdampfer 6 ist ein Expansionsventil 7 in den Kreislauf 1 zwischengeschaltet, durch das das Kreislaufmedium beim Durchtritt entspannt und abgekühlt dem Verdampfer 6 zugeführt wird.

Die einzelnen Komponenten 2,4,5,6,7 der Klimaanlage sind im Kreislauf 1 durch Druckleitungen 8 miteinander verbunden, von denen Feuerlöschleitungen 9 abzweigen. Diese enden an brandgefährdeten Stellen des Motorraumes des Kraftfahrzeuges und weisen dort Löschdüsen 10 auf. In den Feuerlöschleitungen 9 sind Magnetventile 11 angeordnet, die über Steuerleitungen 12 mit einer elektronischen Steuereinheit 13 verbunden sind.

In der Steuereinheit 13 werden elektrische Signale von Sensoren 14 verarbeitet, durch welche bestimmte oder alle Magnetventile 11 im Crash- und/oder Brandfall aufgesteuert werden. Die Sensoren 14 können dabei Crash-Sensoren sein, die zweckmäßiger Weise von den Crash-Sensoren für Airbag und/oder Gurtstraffer gebildet sind oder die separat von diesen angeordnet sind. Desweiteren kann ein Teil der Sensoren 14 auch aus lokal an bestimmten möglichen Brandherden angeordneten, in der Art von Temperaturfühlern wirkenden Brandsensoren bestehen.

An den einzelnen Komponenten der Klimaanlage können auch Deformationssensoren 15 angebracht sein, die auf Beschädigungen der Klimaanlage mit einem Aufsteuern der Löschdüsen 10 über die Steuereinheit 13 reagieren. Denkbar sind ebenfalls Sensoren, die beispielsweise im Brandfalle einen zu hohen Überdruck im Kreislauf signalisieren oder eine Leckage bei Beschädigung infolge eines Druckabfalles im Kreislauf detektieren können und dann gegebenenfalls einen Löschvorgang einleiten. Weiterhin ist ein manuell bedienbarer Schaltknopf 16 vorgesehen, mit dem der Fahrzeuginsasse die Möglichkeit besitzt, eigens die Ventile 11 aufzusteuern.

Entsteht nun beim Unfall die Gefahr eines Brandes oder eines unkontrollierten Austritts von CO₂ aus der Klimaanlage, so werden die Magentventile 11 über die Sensoren 14,15 oder die Betätigung des Schaltknopfes 16 bzw. über die Deformationssensoren 15 durch die Steuereinheit 13 aufgesteuert, so daß CO₂ aus dem Kreislauf 1 der Klimaanlage über die Löschleitungen 9 aus den Löschdüsen 10 kontrolliert und nicht-gefährdend austreten und gezielt den Brandherd löschen oder vorbeugend leicht entflammbare Bereiche wie beispielsweise die Einspritz- und Zündanlage am Motorblock besprühen kann. Dabei ist Vorraussetzung, daß das Kreislaufmedium der Klimaanlage wie CO₂ löschfähig ist. Gleichzeitig wird der unter Druck stehende CO₂-Kreislauf der Klimaanlage örtlich kontrolliert, entlastet, wobei die CO₂-Gase in Räume hineingeleitet werden, in denen sie für die Fahrzeuginsassen ungefährlich sind, so daß eine Erstickungsgefahr vermieden wird. Vorzugsweise wird die Klimaanlage derart entleert, daß sich im Kreislauf Atmosphärendruck einstellt, so daß bei einer eventuellen Beschädigung der Klimaanlage keine Explosionsgefahr herrscht.

Im übrigen ist auch eine Gestaltung von Ventilen, die hier von den Magnetventilen 11 gebildet werden, denkbar, die bei erhöhtem Überdruck durch diesen zum Austritt von CO₂ aufgedrückt werden. Schließlich können Löschdüsen 10 vorgesehen sein, mit denen Bereiche des Kraftfahrzeuges auch außerhalb des Motorraumes besprühbar sind.

## Patentansprüche

1. Kraftfahrzeug mit einer Klimaanlage, die ein umweltverträgliches, nicht-brennbares, bei einer Verbrennung inertes, ungiftiges und unter Normalbedingungen in gasförmigem Aggregatzustand vorliegendes Kreislaufmedium enthält, das bei Entstehen eines Brandherdes am Kraftfahrzeug ein Löschmedium für denselben bildet.

2. Kraftfahrzeug nach Anspruch 1,
**dadurch gekennzeichnet,**
daß das Kreislaufmedium CO₂ ist.

3. Kraftfahrzeug nach Anspruch 1,
**dadurch gekennzeichnet,**
daß an brandgefährdeten Stellen des Kraftfahrzeuges, an den Kreislauf (1) der Klimaanlage angeschlossene Löschdüsen (10) angeordnet sind, die durch lokale Brandsensoren und/oder Crash-Sensoren (14) mittelbar aufsteuerbar sind.

4. Kraftfahrzeug nach Anspruch 3,
**dadurch gekennzeichnet,**
daß die brandgefährdeten Stellen des Kraftfahrzeuges außerhalb des Fahrgastraumes liegen.

5. Kraftfahrzeug nach Anspruch 3,
**dadurch gekennzeichnet,**
daß die Löschdüsen (10) zusätzlich manuell aufsteuerbar sind.

6. Kraftfahrzeug nach Anspruch 3,
**dadurch gekennzeichnet,**
daß sämtliche oder bestimmte Löschdüsen (10) zusätzlich durch einen brandhitze-bedingten Überdruck im Kreislauf (1) der Klimaanlage aufsteuerbar sind.

## Claims

1. Motor vehicle with an air-conditioning system which contains an environmentally compatible, non-flammable, non-toxic circulating medium that is inert in the event of combustion and is present in the gaseous state under normal conditions, which, in the event of a fire breaking out in the motor vehicle, forms an extinguishing medium for the latter.

2. Motor vehicle according to Claim 1, characterized in that the circulating medium is CO₂.

3. Motor vehicle according to Claim 1, characterized in that extinguishing nozzles (10), connected to the circuit (1) of the air-conditioning system, are arranged at fire-hazard points in the motor vehicle and can be indirectly controlled to open by local fire sensors and/or crash sensors (14).

4. Motor vehicle according to Claim 3, characterized in that the fire-hazard points of the motor vehicle lie outside the passenger compartment.

5. Motor vehicle according to Claim 3, characterized in that the extinguishing nozzles (10) can additionally be controlled to open manually.

6. Motor vehicle according to Claim 3, characterized in that all or some of the extinguishing nozzles (10) can additionally be controlled to open by a superatmospheric pressure, caused by fire heat, in the circuit (1) of the air-conditioning system.

## Revendications

1. Véhicule automobile comportant une installation de climatisation, qui contient un fluide circulant, qui est compatible avec l'environnement, incombustible, inerte dans le cas d'une combustion, non toxique et qui est présent, dans des conditions normales, dans un état gazeux et, lors de l'apparition d'un foyer d'incendie dans le véhicule automobile, forme un fluide d'extinction pour ce foyer d'incendie.

2. Véhicule automobile selon la revendication 1, caractérisé en ce que le fluide circulant est du CO₂.

3. Véhicule automobile selon la revendication 1, caractérisé en ce que des buses d'extinction (10), qui sont raccordées au circuit (1) de l'installation de climatisation et qui peuvent être commandées d'une manière indirecte par des détecteurs locaux d'incendie ou des détecteurs de crash (14) sont disposés en des emplacements du véhicule automobile, soumis à un risque d'incendie.

4. Véhicule automobile selon la revendication 3, caractérisé en ce que les emplacements du véhicule automobile, qui sont soumis à un risque d'incendie, sont situés à l'extérieur de l'habitacle.

5. Véhicule automobile selon la revendication 3, caractérisé en ce que les buses d'extinction (10) peuvent être en outre commandées manuellement.

6. Véhicule automobile selon la revendication 3, caractérisé en ce que toutes les buses d'extinction (10) ou certaines d'entre elles peuvent en outre être commandées en supplément au moyen d'une surpression, conditionnée par la chaleur de l'incendie, dans le circuit (1) de l'installation de climatisation.
